# EUROPÄISCHE PATENTSCHRIFT

(11) **EP 1 458 590 B1**
(45) Veröffentlichungstag und Bekanntmachung des Hinweises auf die Patenterteilung: **29.06.2005**
(21) Anmeldenummer: 02793000.7
(22) Anmeldetag: 13.12.2002
(51) Int. Cl.: B60N 2/46, B64D 11/00, B60R 11/02

(54) **ARMELEHNE MIT SCHWENKBAREM BILDSCHIRM**
ARMREST COMPRISING A PIVOTABLE SCREEN
ACCOUDOIR EQUIPE D'UN ECRAN PIVOTANT

(30) Priorität: 14.12.2001 DE 10161663
(43) Veröffentlichungstag der Anmeldung: 22.09.2004
(73) Patentinhaber: Johnson Controls GmbH, 51399 Burscheid (DE)
(72) Erfinder: NEUMANN, Michael, 51579 Gevelsberg (DE)
(74) Vertreter: Hemmelmann, Klaus
(86) Internationale Anmeldenummer: PCT/EP2002/014199
(87) Internationale Veröffentlichungsnummer: WO 2003/051665

(56) Entgegenhaltungen:
- DE-A- 3 719 105
- DE-A- 19 754 224
- DE-A- 19 931 154
- FR-A- 2 805 225
- PATENT ABSTRACTS OF JAPAN vol. 014, no. 575 (M-1062), 20. Dezember 1990 (1990-12-20) & JP 02 249734 A (VICTOR CO OF JAPAN LTD), 5. Oktober 1990 (1990-10-05)
- PATENT ABSTRACTS OF JAPAN vol. 1995, no. 11, 26. Dezember 1995 (1995-12-26) & JP 07 195962 A (HONDA MOTOR CO LTD), 1. August 1995 (1995-08-01)
- PATENT ABSTRACTS OF JAPAN vol. 016, no. 331 (M-1282), 20. Juli 1992 (1992-07-20) & JP 04 095543 A (MAZDA MOTOR CORP), 27. März 1992 (1992-03-27)

## Beschreibung

### Beschreibung

Die Erfindung betrifft eine Armlehne, insbesondere für einen Fahrzeugsitz, mit einem aus einer Nichtgebrauchsstellung in eine Gebrauchsstellung ausklappbaren Bildschirm, wobei die Armlehne eine drehbare erste Armauflage aufweist, an deren freiem Ende der Bildschirm schwenkbar angeordnet ist.

### Stand der Technik

Eine gattungsgemässe Armlehne ist aus der Offenlegungschrift DE 199 31 154 A1 bekannt. Diese ist als Mittelarmlehne einer Rücksitzbank ausgebildet, die aus einer Ausnehmung der Rückenlehne nach vorne in eine waagerechte Lage schwenkbar ist und dabei auf dem Polster des Sitzteils aufliegt. Im vorderen Bereich der Armlehne ist ein Bildschirm drehbar angeordnet, dessen Rückseite in Nichtgebrauchsstellung einen Teil der Auflagefläche bildet. Der Bildschirm kann aus der Armlehne heraus durch Schwenken um eine horizontale, quer zur Fahrtrichtung verlaufende Schwenkachse (Y-Achse des Fahrzeugs) in eine Gebrauchsstellung überführt werden, in der das Display vom Rücksitz aus einsehbar ist.

Diese Anordnung weist verschiedene Nachteile auf. Zum einen kann der Bildschirm in Gebrauchsstellung nur in einem relativ stumpfen Winkel betrachtet werden, so dass der rückwärtige Insasse den Kopf erheblich zur Seite hin verdrehen muß. Diese Körperhaltung ist auf Dauer ermüdend. Weiterhin wird die als Armauflage nutzbare Fläche der Armlehne nach dem Ausschwenken des Bildschirms erheblich verkleinert, wobei insbesondere der in Fahrtrichtung gesehen vordere Bereich nicht mehr zur Verfügung steht. In der Praxis kann die Armlehne daher kaum mehr als solche benutzt werden.

Eine gattungsgemässe Armlehne ist auch aus das Dokument FR 2 805 225 bekannt, welches den nächstliegenden Stand der Technik darstellt.

### Aufgabe

Der Erfindung liegt die Aufgabe zugrunde, eine Armlehne mit einer ergonomischen Gebrauchsstellung für den Bildschirm bereitzustellen, die darüber hinaus auch in dieser Stellung als Armauflage genutzt werden kann.

### Lösung

Die Aufgabe wird erfindungsgemäß dadurch gelöst, dass bei einer gattungsgemäßen Armlehne eine gegenüber der ersten Armauflage drehbare zweite Armauflage vorgesehen ist, die in Nichtgebrauchsstellung des Bildschirms von der ersten Armauflage verdeckbar ist.

Dabei ist die zweite Armauflage bevorzugt um die gleiche Drehachse wie die erste Armauflage drehbar, so dass für beide Armauflagen ein gemeinsames Gelenk vorgesehen werden kann.

Mit Vorteil ist der Bildschirm in Nichtgebrauchsstellung unter die zweite Armauflage schwenkbar und damit vor Beschädigungen geschützt.

Die zweite Armauflage kann nach einer besonderen Ausbildung der Erfindung bei Gebrauchsstellung des Bildschirms in die gleiche Position gebracht werden wie bei Nichtgebrauchsstellung des Bildschirms und bietet den Fahrzeuginsassen eine nur unwesentlich verkleinerte Auflagefläche.

### Figuren

Die Figuren stellen beispielhaft und schematisch eine Ausführung der Erfindung dar.

Es zeigen:
- Fig. 1: eine seitliche Ansicht der erfindungsgemäßen Armlehne bei Nichtgebrauchsstellung des Bildschirms
- Fig. 2: die Armlehne in Position nach Fig. 1 in perspektiver Ansicht aus Sicht der rückwärtigen Fahrzeuginsassen
- Fig. 3: eine erste Phase des Ausschwenkens des Bildschirms in seitlicher Ansicht
- Fig. 4: eine nachfolgende Phase des Ausschwenkens
- Fig. 5: eine seitliche Ansicht der erfindungsgemäßen Armlehne bei Gebrauchsstellung des Bildschirms
- Fig. 6: die Armlehne in Position nach Fig. 5 in perspektiver Ansicht aus Sicht der rückwärtigen Fahrzeuginsassen

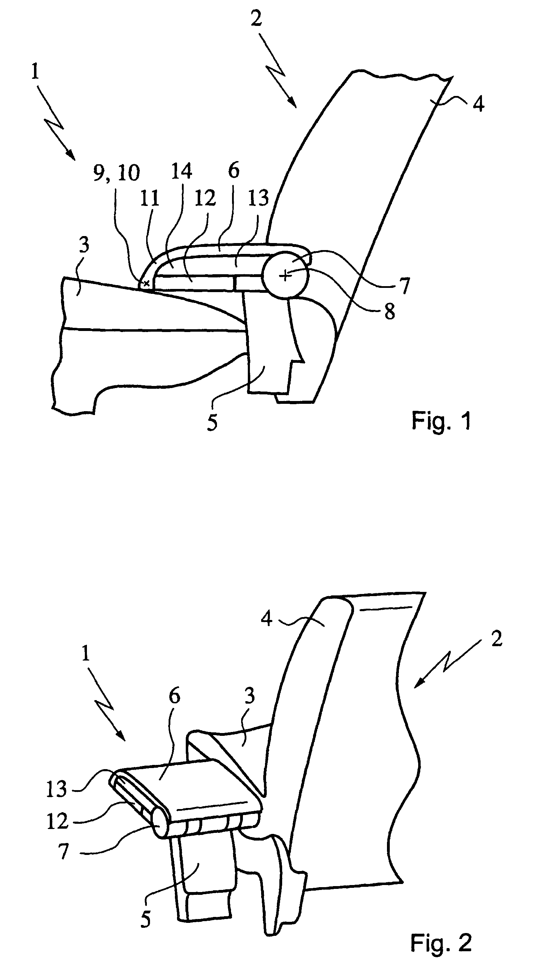

Die erfindungsgemäße Armlehne 1 ist, wie aus Fig. 1 und 2 ersichtlich, seitlich an einem Fahrzeugsitz 2 angeordnet, der ein Sitzteil 3 und eine Rückenlehne 4 aufweist. Sie ist auf eine Mittelkonsole 5 aufgesetzt, ohne zwangsläufig in diese integriert zu sein, und eignet sich daher grundsätzlich auch für die Nachrüstung eines Fahrzeugs.

Die Armlehne 1 besteht aus einer ersten, in der abgebildeten Position im Wesentlichen horizontalen Armauflage 6, die um ein ortsfest zum Fahrzeuginnenraum oder ortsfest zum Sitzteil 3 angeordnetes Gelenk 7 um eine horizontale, quer zur Fahrtrichtung verlaufende Drehachse 8 drehbar ist.

An der Unterkante des in Fahrtrichtung gesehen vorderen, aus Komfortgründen nach unten geneigten Bereichs 11 der ersten Armauflage 6 befindet sich ein weiteres Gelenk 9, dessen Schwenkachse 10 achsparallel zur Drehachse 8 verläuft und das die erste Armauflage 6 schwenkbar mit einem Bildschirm 12 verbindet. Das Gelenk 9 ist so ausgebildet, dass der Bildschirm 12 in eine Nichtgebrauchsstellung schwenkbar ist, in welcher er im Wesentlichen parallel zum waagerechten Teil der Armauflage 6 ausgerichtet und zu diesem infolge des nach unten geneigten Bereichs 11 beabstandet ist. Das Display 15 des Bildschirms 12 ist dabei nach unten gerichtet.

Im Spalt zwischen erster Armauflage 6 und Bildschirm 12 ist eine zweite Armauflage 13 angeordnet, die im Gelenk 7 ebenfalls um die Drehachse 8 drehbar ist. Die Armauflagen 6 und 13 können dabei, sofern zwischen ihnen keine Kollisionen auftreten, unabhängig voneinander bewegt und im Gelenk 7 arretiert werden. Auch die zweite Armauflage 13 ist in der dargestellten Position im Wesentlichen waagerecht ausgerichtet und an ihrem vorderen Ende 14 nach vorne abfallend gerundet.

Der Bildschirm 12 ist in dieser Stellung von den rückwärtigen Sitzen aus naturgemäß nicht einsehbar (Fig. 2) und gegen mechanische Beschädigungen geschützt.

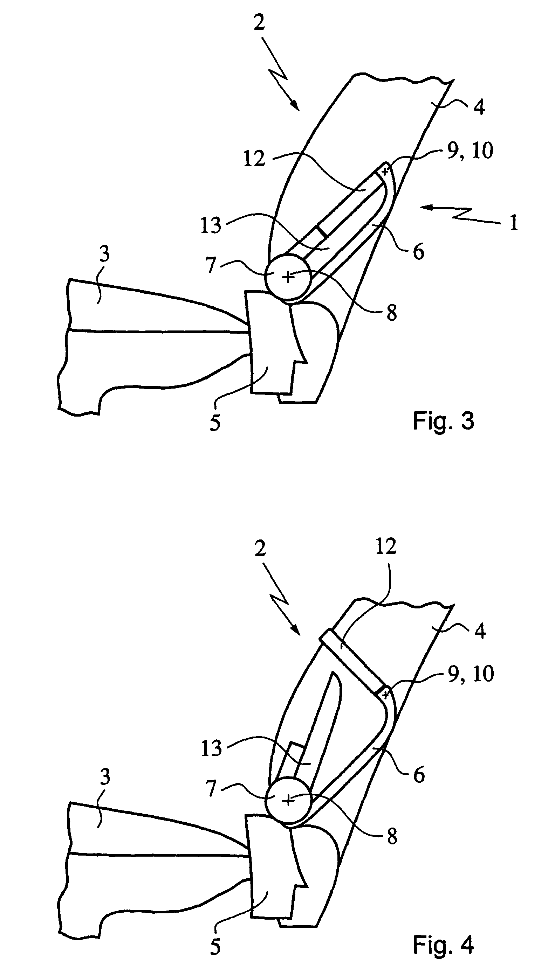

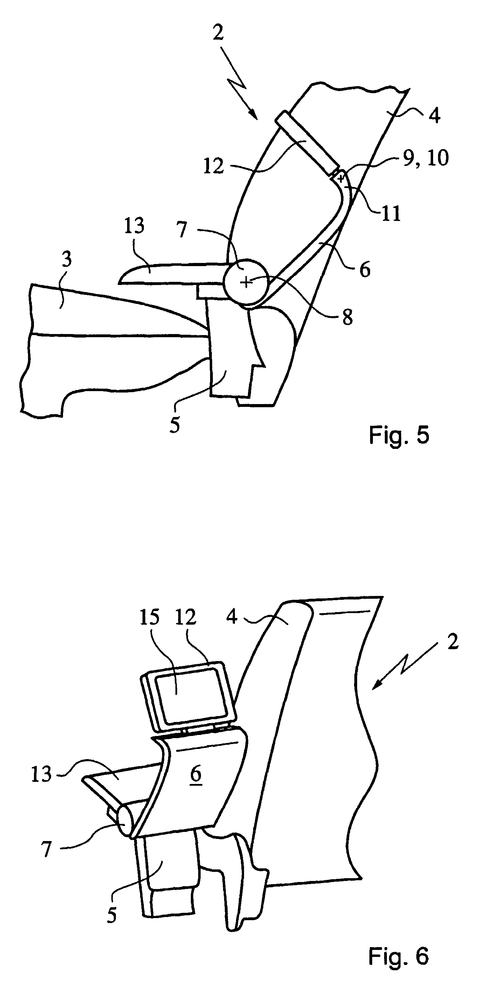

Beim Überführen des Bildschirms 12 in die Gebrauchsstellung wird zuerst das Paket aus den Armauflagen 6, 13 und dem Bildschirm 12 insgesamt um die Drehachse 8 in eine aufrechte Stellung gedreht (Fig. 3). Nachfolgend wird der Bildschirm 12 um die Schwenkachse 10 verschwenkt, bis das Display 15 etwa tangential zum geneigten Bereich 11 der ersten Armauflage 6 ausgerichtet ist und in dieser Stellung durch Arretieren des Gelenks 9 fixiert. Gleichfalls wird die erste Armauflage 6 im Gelenk 7 arretiert (Fig. 4). Anschließend kann die zweite Armauflage 13 im Gelenk 7 in ihre Ausgangsposition zurückgedreht werden und steht dem Insassen des Fahrzeugsitzes 2 mit einer zwar geringfügig verkleinerten, aber immer noch komfortablen Auflagefläche zur Verfügung (Fig. 5). Die Insassen der rückwärtigen Sitze können das Display 15 in der Gebrauchsstellung des Bildschirms 12 nun bequem einsehen (Fig. 6).

Das Überführen des Bildschirms 12 aus der Gebrauchsstellung in die Nichtgebrauchsstellung erfolgt sinngemäß in umgekehrter Reihenfolge.

### Bezugszeichen

- 1: Armlehne
- 2: Fahrzeugsitz
- 3: Sitzteil
- 4: Rückenlehne
- 5: Mittelkonsole
- 6: Armauflage
- 7: Gelenk
- 8: Drehachse
- 9: Gelenk
- 10: Schwenkachse
- 11: geneigter Bereich
- 12: Bildschirm
- 13: Armauflage
- 14: vorderes Ende
- 15: Display

## Patentansprüche

1. Armlehne, insbesondere für einen Fahrzeugsitz (2), mit einem aus einer Nichtgebrauchsstellung in eine Gebrauchsstellung ausklappbaren Bildschirm (12), wobei die Armlehne (1) eine drehbare erste Armauflage (6) aufweist, an deren freiem Ende der Bildschirm schwenkbar angeordnet ist, **gekennzeichnet durch** eine gegenüber der ersten Armauflage (6) drehbare zweite Armauflage (13), die in Nichtgebrauchsstellung des Bildschirms (12) von der ersten Armauflage verdeckbar ist.

2. Armlehne nach Anspruch 1, **dadurch gekennzeichnet**, das die zweite Armauflage (13) um die gleiche Drehachse (8) wie die erste Armauflage (6) drehbar ist.

3. Armlehne nach Anspruch 1 oder 2, **dadurch gekennzeichnet, dass** der Bildschirm (12) in Nichtgebrauchsstellung unter die zweite Armauflage (13) schwenkbar ist.

4. Armlehne nach einem der vorhergehenden Ansprüche, **dadurch gekennzeichnet, dass** die zweite Armauflage (13) bei Gebrauchsstellung des Bildschirms (12) in die gleiche Position bringbar ist wie bei Nichtgebrauchsstellung des Bildschirms.

## Claims

1. An arm rest, in particular for a vehicle seat (2) having a viewing screen (12) which can be swung up from a non-functional position into a functional position, the arm rest (1) having a rotatable first arm support (6) at whose free end the viewing screen is arranged pivotably, **characterized by** a second arm support (13) which can be rotated in relation to the first arm support (6) and, in the non-functional position of the viewing screen (12), can be concealed by the first arm support.

2. The arm rest as claimed in claim 1, **characterized in that** the second arm support (13) can be rotated about the same axis of rotation (8) as the first arm support (6).

3. The arm rest as claimed in claim 1 or 2, **characterized in that** the viewing screen (2) in the non-functional position can be pivoted under the second arm support (13).

4. The arm rest as claimed in one of the preceding claims, **characterized in that** the second arm support (13) in the functional position of the viewing screen (12) can be brought into the same position as in the non-functional position of the viewing screen.

## Revendications

1. Accoudoir, notamment pour un siège de véhicule (2), comprenant un écran (12) pouvant être sorti par pivotement d'une position de non utilisation dans une position d'utilisation, l'accoudoir (1) présentant un premier appuie-bras rotatif (6) à l'extrémité libre duquel l'écran est disposé de manière à pouvoir pivoter, **caractérisé par** un deuxième appuie-bras (13) pouvant pivoter par rapport au premier appuie-bras (6), lequel peut être recouvert par le premier appuie-bras dans la position de non utilisation de l'écran (12).

2. Accoudoir selon la revendication 1, **caractérisé en ce que** le deuxième appuie-bras (13) peut pivoter autour du même axe de rotation (8) que le premier appuie-bras (6).

3. Accoudoir selon la revendication 1 ou 2, **caractérisé en ce que** l'écran (12) peut pivoter dans la position de non utilisation sous le deuxième appuie-bras (13).

4. Accoudoir selon l'une quelconque des revendications précédentes, **caractérisé en ce que** dans la position d'utilisation de l'écran (12), le deuxième appuie-bras (13) peut être amené dans la même position que dans la position de non utilisation de l'écran.
